# EUROPÄISCHE PATENTSCHRIFT

(11) **EP 1 853 079 B1**
(45) Veröffentlichungstag und Bekanntmachung des Hinweises auf die Patenterteilung: **09.01.2013**
(21) Anmeldenummer: 06009177.4
(22) Anmeldetag: 03.05.2006
(51) Int. Cl.: H04W 28/16, H04W 92/20

(54) **Funkressourcenverwaltung in einem Mobilfunkkommunikationssystem**
Radio resource administration in a mobile radio communications network
Administration des ressources radio dans un réseau de communication radio mobile

(43) Veröffentlichungstag der Anmeldung: 07.11.2007
(73) Patentinhaber: Nokia Siemens Networks GmbH & Co. KG, 81541 München (DE)
(72) Erfinder: Breuer, Volker Dr., 16727 Bötzow (DE); Ulrich, Thomas, 67098 Bad Dürkheim (DE); Viering, Ingo Dr., 81539 München (DE)

(56) Entgegenhaltungen:
- WO-A-02/087163

## Beschreibung

Die Erfindung betrifft ein Verfahren zum Betreiben eines Funkkommunikationssystems, in welchem netzseitige Funkeinrichtungen zur Kommunikation mit Teilnehmerstationen Funkressourcen verwenden.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkeinrichtungen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen können die Funkressourcen im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren. Um eine möglichst effiziente Funkübertragung zu erreichen, kann das gesamte zur Verfügung stehende Frequenzband in mehrere Subbänder (Multicarrier- bzw. Mehrträgerverfahren) zerlegt werden. Die den Mehrträgersystemen zugrunde liegende Idee ist es, das Ausgangsproblem der Übertragung eines breitbandigen Signals in die Übertragung mehrerer schmalbandiger Signale zu überführen. Ein Beispiel für ein Mehrträgerübertragungsverfahren ist OFDM (Orthogonal Frequency Division Multiplexing).

Aus WO 02/087163 A2 (Siemens Aktiengesellschaft et al.), veröffentlicht am 31. Oktober 2002, ist ein Verfahren zum Zugreifen von Stationen auf ein gemeinsames Übertragungsmedium, bei dem sich die Stationen mit anderen Stationen das gemeinsame Übertragungsmedium teilen, bekannt. Um die vorhandene Übertragungskapazität möglichst effizient zu verteilen, wird in WO 02/087163 A2 vorgeschlagen, dass sich die Stationen bei Bedarf durch das Versenden von Nachrichten über ihre Kapazitätsbedürfnisse informieren. Die versendeten Nachrichten können dabei Informationen über die Priorität und den Kapazitätsbedarf enthalten. Stationen, welche die versendeten Kapazitätsanforderungen empfangen, geben nicht benötigte oder nicht dringend benötigte Übertragungskapazität frei, so dass diese von der bedürftigen Station verwendet werden kann.

Der Erfindung liegt die Aufgabe zugrunde, ein effizientes Verfahren zum Betreiben eines Funkkommunikationssystems und ein für die Durchführung des Verfahrens geeignetes Funkkommunikationssystem aufzuzeigen.

Diese Aufgabe wird durch ein Verfahren mit den Merkmalen des Anspruchs 1 und durch ein Funkkommunikationssystem mit Merkmalen eines nebengeordneten Anspruchs gelöst. Vorteilhafte Ausgestaltungen und Weiterbildungen sind Gegenstand von Unteransprüchen.

Das erfindungsgemäße Verfahren betrifft das Betreiben eines Funkkommunikationssystems. In dem Funkkommunikationssystem verwenden netzseitige Funkeinrichtungen zur Kommunikation mit Teilnehmerstationen Funkressourcen. Eine erste netzseitige Funkeinrichtung führt eine direkte Abstimmung mit einer zweiten netzseitigen Funkeinrichtung über die jeweils verwendeten Funkressourcen durch. Von der ersten und/oder der zweiten netzseitigen Funkeinrichtung wird eine Anfrage nach einer Entscheidung über von der ersten und/oder der zweiten netzseitige Funkeinrichtung zu verwendende Funkressourcen an eine Einrichtung gesendet. Die erste und/oder die zweite netzseitige Funkeinrichtung empfängt auf die Anfrage hin von der Einrichtung Informationen über von der ersten und/oder der zweiten netzseitigen Funkeinrichtung zu verwendende Funkressourcen.

Die netzseitigen Funkeinrichtungen kommunizieren jeweils mit Teilnehmerstationen. Diese Kommunikation kann jeweils die Nachrichtenversendung und/oder den Nachrichtenempfang durch die jeweilige netzseitige Funkeinrichtung umfassen. Für die Kommunikation mit den Teilnehmerstationen verwenden die netzseitigen Funkeinrichtungen Funkressourcen. Diese Funkressourcen stehen den netzseitigen Funkeinrichtungen zur Verfügung. Hierbei müssen die von einer netzseitigen Funkeinrichtung verwendeten bzw. ihr zur Verfügung stehenden Funkressourcen nicht ununterbrochen von dieser benutzt werden, die netzseitige Funkeinrichtung hat jedoch während der Zeit, in welcher ihr die Funkressourcen zur Verfügung stehen, die Möglichkeit, diese zu nutzen. Bei den Funkressourcen kann es sich insbesondere um eine Kombination einer oder mehrerer der Größen Frequenz, Zeit, Code und Raum handeln.

Die erste und die zweite netzseitige Funkeinrichtung stimmen sich direkt über die von ihnen jeweils verwendeten Funkressourcen ab. Bei einer direkten Abstimmung über die verwendeten Funkressourcen haben die netzseitigen Funkeinrichtungen ohne Einbeziehung einer zentralen entscheidenden Instanz eine Entscheidungsbefugnis über die Aufteilung von Funkressourcen zwischen den netzseitigen Funkeinrichtungen. Im Rahmen einer solchen Abstimmung kann z.B. eine netzseitige Funkeinrichtung der anderen mitteilen, welche Funkressourcen sie aktuell verwendet oder verwenden wird. Weiterhin kann z.B. eine netzseitige Funkeinrichtung bei der anderen netzseitigen Funkeinrichtung anfragen, ob sie Funkressourcen verwenden darf, welche aktuell die andere netzseitige Funkeinrichtung verwendet.

Zusätzlich zur dezentralen direkten Abstimmung erfolgt die Einbeziehung einer Einrichtung als zentrale Instanz. Diese kann von der ersten und/oder von der zweiten netzseitigen Funkeinrichtung kontaktiert werden. Auf diese Anfrage hin sendet die Einrichtung einer oder beiden der netzseitigen Funkeinrichtungen Informationen darüber, welche Funkressourcen von der ersten und/oder der zweiten netzseitigen Funkeinrichtung zu verwenden sind. Diese Informationen werden bei der zukünftigen Verwendung von Funkressourcen durch die netzseitigen Funkeinrichtungen befolgt. Die Informationen ergänzen somit die direkte Abstimmung zwischen den netzseitigen Funkeinrichtungen. Dies ist insofern vorteilhaft, als der Einrichtung Kenntnisse vorliegen können, welche den netzseitigen Funkeinrichtungen nicht vorliegen, so dass der Einrichtung ein effizienteres Entscheiden über die Verteilung der Funkressourcen möglich sein kann.

Das erläuterte Verfahren kann auch auf mehr als zwei netzseitige Funkeinrichtungen, welche sich direkt über die Verwendung von Funkressourcen abstimmten, angewandt werden.

In Weiterbildung der Erfindung wird die Anfrage gesendet im Falle eines Konfliktes bei einer Entscheidung über von der ersten und/oder der zweiten netzseitigen Funkeinrichtung zu verwendende Funkressourcen im Rahmen der direkten Abstimmung. Die Einrichtung kann somit als Schlichter fungieren, wenn bei der direkten Abstimmung z.B. nicht in einer bestimmten Zeit eine Lösung gefunden wird, oder das gleiche Problem wiederholt auftritt, oder die gefundene Lösung für eine oder beide der netzseitigen Funkeinrichtungen nicht zufrieden stellend ist.

Vorteilhaft ist es, wenn die Anfrage gesendet wird im Falle einer Unmöglichkeit der Entscheidung über von der ersten und/oder der zweiten netzseitigen Funkeinrichtung zu verwendende Funkressourcen im Rahmen der direkten Abstimmung. Eine solche Unmöglichkeit kann sich z.B. ergeben, wenn die beiden netzseitigen Funkeinrichtungen bei ihrer direkten Abstimmung bestimmte Regeln einsetzen, die Funkressourcen abhängig von bestimmten Forderungen der netzseitigen Funkeinrichtungen den netzseitigen Funkeinrichtungen zuordnen, und bei den aktuellen Forderungen der netzseitigen Funkeinrichtungen unter Verwendung dieser Regeln keine Zuordnung möglich ist.

In Weiterbildung der Erfindung wird die Anfrage gesendet im Falle von oszillierenden Entscheidungen über von der ersten und/oder der zweiten netzseitigen Funkeinrichtung zu verwendende Funkressourcen im Rahmen der direkten Abstimmung. Oszillierenden Entscheidungen bedeuten, dass kein stabiler Zustand der Zuordnung von Funkressourcen zu netzseitigen Funkeinrichtungen gefunden wird, sondern dass zwischen zwei oder mehr Zuständen in rascher Abfolge wiederholt gewechselt wird.

Besonders vorteilhaft ist es, wenn aufgrund der direkten Abstimmung von der ersten netzseitigen Funkeinrichtung ausschließlich andere Funkressourcen verwendet werden als von der zweiten netzseitigen Funkeinrichtung. Ein Ziel der direkten Abstimmung ist es in diesem Fall, zu vermeiden, dass die erste und die zweite netzseitige Funkeinrichtung die gleichen oder überlappende Funkressourcen verwenden. Letzteres wäre z.B. der Fall, wenn die beiden netzseitigen Funkeinrichtungen die gleiche Frequenz zur gleiche Zeit in überlappenden örtlichen Bereichen verwenden.

In Ausgestaltung der Erfindung führt die Einrichtung durch die Informationen eine Neuzuweisung von von der ersten und/oder der zweiten netzseitigen Funkeinrichtung zu verwendenden Funkressourcen durch. Wird den Informationen der Einrichtung Folge geleistet, so ändern sich die verwendeten Funkressourcen der ersten und/oder der zweiten netzseitigen Funkeinrichtung.

Es ist möglich, dass die erste und/oder die zweite netzseitige Funkeinrichtung zusätzlich zum Empfang der angefragten Informationen unangefragte Informationen über von der ersten und/oder der zweiten netzseitigen Funkeinrichtung zu verwendende Funkressourcen von der Einrichtung empfängt. Auf diese Weise kann die Einrichtung auch ohne Anfrage durch die netzseitigen Funkeinrichtungen tätig werden, indem sie der ersten und/oder der zweiten netzseitigen Funkeinrichtung vorschreibt, welche Funkressourcen zu verwenden sind. Dieses Vorgehen eignet sich besonders für Ausnahmesituationen, wie z.B. Notfallsituation aufgrund von Unfällen.

Mit Vorzug umfassen die Funkressourcen Kombinationen von Subbändern eines Frequenzbandes mit Zeitabschnitten. Dies eignet sich besonders für OFDM-Systeme.

In dem erfindungsgemäßen Funkkommunikationssystem verwenden netzseitige Funkeinrichtungen zur Kommunikation mit Teilnehmerstationen Funkressourcen. Es ist eine erste und eine zweite netzseitige Funkeinrichtung vorhanden, welche eine direkte Abstimmung untereinander über die jeweils verwendeten Funkressourcen durchführen. Die erste und/oder die zweite netzseitige Funkeinrichtung umfasst Mittel zum Senden einer Anfrage nach einer Entscheidung über von der ersten und/oder der zweiten netzseitigen Funkeinrichtung zu verwendende Funkressourcen an eine Einrichtung. Die Einrichtung umfasst Mittel zum Entscheiden über von der ersten und/oder der zweiten netzseitigen Funkeinrichtung zu verwendende Funkressourcen und zum Senden von Informationen über von der ersten und/oder der zweiten netzseitigen Funkeinrichtung zu verwendende Funkressourcen an die erste und/oder die zweite netzseitige Funkeinrichtung.

Das erfindungsgemäße Funkkommunikationssystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel umfassen.

Im folgenden wird die Erfindung anhand eines Ausführungsbeispiels näher erläutert. Dabei zeigt:

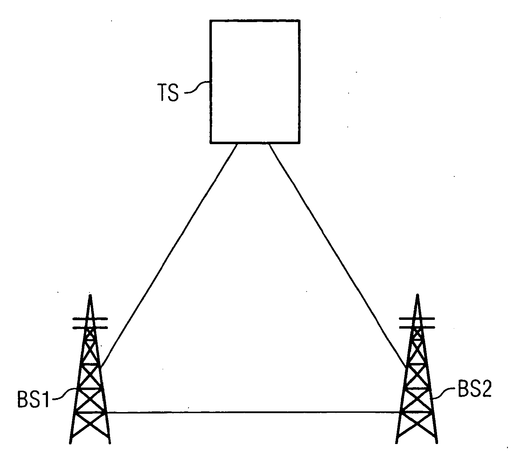

- Figur 1:: einen Ausschnitt aus einem Mobilfunkkommunikationssystem.

Der in Figur 1 dargestellte Ausschnitt aus einem Mobilfunkkommunikationssystem umfasst die beiden netzseitigen Funkeinrichtungen BS1 und BS2. Diese sind miteinander verbunden, wobei die Verbindung über Leitung und/oder über Funk realisiert sein kann; vorzugsweise handelt es sich um eine IP-Verbindung (IP: Internet Protocol). Weiterhin sind die beiden netzseitigen Funkeinrichtungen BS1 und BS2 mit der Einrichtung TS verbunden, deren Funktion im folgenden näher erläutert wird. Auch die Verbindungen zwischen der Einrichtung TS und den netzseitigen Funkeinrichtungen BS1 und BS2 kann über Leitung und/oder über Funk realisiert sein. Sowohl die Verbindung zwischen den beiden netzseitigen Funkeinrichtungen BS1 und BS2 als auch diejenige zwischen den netzseitigen Funkeinrichtungen BS1 und BS2 und der Einrichtung TS kann über andere Knoten verlaufen.

Die netzseitigen Funkeinrichtungen BS1 und BS2 kommunizieren in ihren jeweiligen Funkabdeckungsbereichen mit in Figur 1 nicht dargestellten Teilnehmerstationen. Bei den netzseitigen Funkeinrichtungen BS1 und BS2 handelt es sich um benachbarte netzseitige Funkeinrichtungen, d.h. die Funkabdeckungsbereiche der netzseitigen Funkeinrichtungen BS1 und BS2 grenzen aneinander an. Weitere netzseitige Funkeinrichtungen, sowie andere Einrichtungen des Mobilfunkkommunikationssystems sind zur Vereinfachung nicht in Figur 1 enthalten. Vorzugsweise handelt es sich bei dem Mobilfunkkommunikationssystem um ein zellulares System mit flächendeckender Funkabdeckung.

Die netzseitigen Funkeinrichtungen BS1 und BS2 verwenden zur Kommunikation mit Teilnehmerstationen Funkressourcen. Bei einer Funkressourceneinheit kann es sich z.B. in einem OFDM-System um die Kombination aus einem Subband und einem Zeitabschnitt handeln, gegebenenfalls zusätzlich in Kombination mit einer Raumrichtungskomponente. Verwenden die netzseitigen Funkeinrichtungen BS1 und BS2 zur gleichen Zeit die gleichen Funkressourcen, führt dies zu Interferenzen zwischen den in den benachbarten Funkabdeckungsbereichen ausgestrahlten Signalen. Bei starker Interferenz sind die Signale nicht mehr dekodierbar. Um diese unerwünschte Situation zu vermeiden, wird im Rahmen des RRM (Radio Resource Management) versucht, die Funkressourcen derart unter den netzseitigen Funkeinrichtungen aufzuteilen, dass Überlappungen weitestgehend vermieden werden. Neben dem Zweck der Interferenzverminderung dient das RRM u.a. auch den Zielen des Load Balancing, d.h. der Ausgleichung der Verkehrslast zwischen verschiedenen netzseitigen Funkeinrichtungen, der Unterstützung der Teilnehmerpriorisierung, und der Ermöglichung von effizienten Handovervorgängen zwischen benachbarten netzseitigen Funkeinrichtungen.

Es findet eine dezentrale Abstimmung über die verwendeten Funkressourcen zwischen den netzseitigen Funkeinrichtungen BS1 und BS2 statt. Die Verwendung von Funkressourcen durch eine netzseitige Funkeinrichtung bedeutet, dass diese netzseitige Funkeinrichtung berechtigt ist, die Funkressourcen in ihrer Funkzelle für Abwärtsrichtungs- und/oder Aufwärtsrichtungsnachrichtenübertragungen, d.h. für Nachrichtenübertragungen von der netzseitigen Funkeinrichtung zu Teilnehmerstationen bzw. von Teilnehmerstationen zu der netzseitigen Funkeinrichtung, einzusetzen.

Im Rahmen dieser Abstimmung kann eine netzseitige Funkeinrichtung BS1 oder BS2 z.B. der anderen netzseitigen Funkeinrichtung BS1 oder BS2 mitteilen, dass sie bestimmte Funkressourcen verwendet, woraufhin die andere netzseitige Funkeinrichtung BS1 oder BS2 diese Funkressourcen nicht verwendet. Die Informationen können bereits umgesetzte als auch zukünftig umzusetzende Entscheidungen betreffen. Es kann auch eine Anfrage einer netzseitigen Funkeinrichtung BS1 oder BS2 an die andere netzseitige Funkeinrichtung BS1 oder BS2 zur Freigabe von Funkressourcen erfolgen, welcher die andere netzseitige Funkeinrichtung BS1 oder BS2 nachkommen kann oder welche die andere netzseitige Funkeinrichtung BS1 oder BS2 ablehnend beantworten kann. Auch können die netzseitigen Funkeinrichtungen BS1 und BS2 Messergebnisse austauschen, um eine vorteilhafte Aufteilung der Funkressourcen vorzunehmen.

Vorzugsweise beachten die beiden netzseitigen Funkeinrichtungen BS1 und BS2 bei ihrer Abstimmung bestimmte Regeln. So kann z.B. geregelt sein, dass eine netzseitige Funkstation dann bevorzugt Funkressourcen verwenden darf, wenn mit ihr Teilnehmerstationen einer bestimmten Kategorie kommunizieren möchten, wie z.B. Teilnehmerstationen mit Echtzeit-Anforderungen.

Durch die dezentrale Abstimmung über die Verwendung der Funkressourcen kann eine flexible Anpassung der Funkressourcennutzung an den tatsächlichen Bedarf erfolgen. Da hierfür außer den unmittelbar betroffenen netzseitigen Funkeinrichtungen BS1 und BS2 keine weitere Instanz beteiligt ist, kann eine Umverteilung rasch erfolgen, so dass hierdurch wenig Verzögerungen verursacht werden. Es wird hierfür keine zentrale Einrichtung benötigt, wodurch Kosten gespart werden und die Architektur des Systems vereinfacht wird.

Es ist jedoch möglich, dass bei der dezentralen Abstimmung Konfliktsituationen auftreten, bei welchen gemäß den von den netzseitigen Funkeinrichtungen BS1 und BS2 verwendeten Abstimmungs-Regeln keine Verteilung gefunden wird. Dies trifft insbesondere auf Situationen zu, in welchen beide netzseitige Funkeinrichtungen BS1 und BS2 eine hohe Verkehrslast verzeichnen. Wenn beispielsweise die netzseitige Funkeinrichtung BS1 60% der Funkressourcen beansprucht, während die netzseitige Funkeinrichtung BS2 70% der Funkressourcen beansprucht, ohne dass andere Kriterien zur Verfügung stehen, welche eine Entscheidung über die Art der Aufteilung der Funkressourcen ermöglichen, reichen die den netzseitigen Funkeinrichtungen BS1 und BS2 zur Verfügung stehenden Regeln nicht aus, über die durchzuführende Aufteilung zu entscheiden.

Auch in Situationen, in welchen die Regeln zwar erlauben, eine Verteilung zu finden, kann diese unstabil sein. Denn das RRM jeder der beiden netzseitigen Funkeinrichtungen BS1 und BS2 kann als eine Kontrollschleife mit externen Einflüssen angesehen werden, welche leicht unstabil werden kann. Dies kann sich z.B. durch Oszillationen äußern.

Um zu erreichen, dass die netzseitigen Funkeinrichtungen BS1 und BS2 in jeder Situation eine Aufteilung der Funkressourcen bestimmen können bzw. eine stabile Aufteilung bestimmen können, müssten eine Vielzahl von komplexen Regeln definiert werden. Hierdurch würde die Abstimmung zwischen den netzseitigen Funkeinrichtungen BS1 und BS2 aufwendig. Dies wird umso komplizierter, wenn berücksichtigt wird, dass eine netzseitige Funkeinrichtung in der Regel nicht nur eine, sondern mehrere benachbarte netzseitige Funkeinrichtungen aufweist, mit welchen eine Abstimmung über die zu verwendenden Funkressourcen erfolgen muss.

Für die Auflösung von Konflikten bei der Aufteilung der Funkressourcen ist die Einrichtung TS zuständig. Diese wird von einer oder beiden der netzseitigen Funkeinrichtungen BS1 und BS2 kontaktiert, wenn diese eine Entscheidung der Einrichtung TS für notwendig oder sinnvoll hält bzw. halten. Die Einrichtung TS entscheidet gleichsam wie ein "Schiedsrichter" darüber, welche Funkressourcen die beiden netzseitigen Funkeinrichtungen BS1 und BS2 jeweils verwenden dürfen. Es ist möglich, dass in diese Entscheidung lediglich die Situation der beiden netzseitigen Funkeinrichtungen BS1 und BS2 einbezogen wird, oder auch, dass weitere netzseitige Funkeinrichtungen berücksichtigt werden. So ist es beispielsweise möglich, dass die Einrichtung TS entscheidet, dass Funkressourcen von einer weiteren netzseitigen Funkeinrichtung freizugeben sind und von der netzseitigen Funkeinrichtung BS1 verwendet werden dürfen, während die von der netzseitigen Funkeinrichtung BS2 verwendeten Funkressourcen gleich bleiben. Aufgrund der Verwendung von komplexeren Entscheidungsregeln durch die Einrichtung TS und aufgrund des Zur-Verfügung-Stehens einer größeren Informationsfülle bei der Einrichtung TS als bei den netzseitigen Funkeinrichtungen BS1 und BS2 ist es der Einrichtung TS möglich, bessere Entscheidungen über die Aufteilung der Funkressourcen zu treffen als dies den netzseitigen Funkeinrichtungen BS1 und BS2 möglich ist.

Die Einrichtung TS kann als eigenständige Einrichtung realisiert werden. Die Funktionalität der Einrichtung TS kann jedoch auch in eine zu anderen Zwecken verwendete Einrichtung integriert werden, so z.B. in ein "Access Gateway". Die Einrichtung TS kann eine Verbindung zum O&M (O&M: Operation & Maintenance) System aufweisen, so dass O&M-Einstellungen über die Einrichtung TS an die netzseitigen Funkeinrichtungen BS1 und BS2 übertragbar sind.

Die Einrichtung TS teilt den netzseitigen Funkeinrichtungen BS1 und BS2 mit, welche Funkressourcen diese im folgenden verwenden sollen. Diese Aufteilung kann zu einem späteren Zeitpunkt durch eine dezentrale Abstimmung zwischen den netzseitigen Funkeinrichtungen BS1 und BS2 geändert werden.

Die Häufigkeit, mit welcher die Einrichtung TS von den netzseitigen Funkeinrichtungen BS1 und BS2 kontaktiert wird, hängt von der Komplexität der in den netzseitigen Funkeinrichtungen BS1 und BS2 realisierten RRM-Mechanismen ab. Diese sollten so komplex sein, dass ein Eingreifen bzw. Zur-Hilfe-Rufen der Einrichtung TS die Ausnahme darstellt, während das dezentrale RRM durch die direkte Abstimmung die Regel ist.

Zusätzlich zu dem bereits erläuterten Einsatz der Einrichtung TS in Konfliktsituationen können spezielle Situationen existieren, in welchen ein zentralisiertes RRM nötig ist. So ist es z.B. vorteilhaft, in Notfallsituationen bestimmten Teilnehmern abweichend von der üblichen Teilnehmerpriorisierung vermehrt Funkressourcen zur Verfügung zu stellen. Ein Beispiel hierfür sind Ärzte oder andere Hilfskräfte bei Unglücksfällen.

Weiterhin kann die Einrichtung TS eine Grobaufteilung der Funkressourcen vornehmen, von welcher ausgehend die netzseitigen Funkeinrichtungen BS1 und BS2 die dezentrale Aufteilung durchführen. Diese Grobaufteilung kann wiederholt durchgeführt werden und sich mit der Zeit ändern. Wenn beispielsweise die netzseitigen Funkeinrichtungen BS1 und BS2 sich aufgrund ihres Funkverkehrsaufkommens einen Pool von Funkressourcen etwa hälftig teilen sollten, die netzseitige Funkeinrichtung BS1 jedoch 80% der Ressourcen dieses Pools verwendet, ist es möglich, dass die Einrichtung TS eine Aufteilung derart anordnet, dass der netzseitige Funkeinrichtung BS2 80% der Ressourcen zur Verfügung stehen. Diese Aufteilung ist die Aufteilung, welche einer neuen direkten Abstimmung zwischen den netzseitigen Funkeinrichtungen BS1 und BS2 zugrunde liegt. Auf diese Weise kann die Abstimmung zwischen den netzseitigen Funkeinrichtungen BS1 und BS2 beschleunigt werden.

Während die Erfindung anhand zweier netzseitiger Funkeinrichtungen erläutert wurde, ist sie auf eine größere Anzahl netzseitiger Funkeinrichtungen anwendbar. Zwischen diesen kann die direkte Abstimmung in Kombination mit der Unterstützung durch die Einrichtung TS jeweils paarweise erfolgen. Weiterhin ist es möglich, dass zwischen drei oder mehr netzseitigen Funkeinrichtungen eine direkte Abstimmung erfolgt, welche durch von den netzseitigen Funkeinrichtungen angeforderte Anweisungen der Einrichtung TS in der beschriebenen Weise ergänzt wird.

## Patentansprüche

1. Verfahren zum Betreiben eines Funkkommunikationssystems, in welchem netzseitige Funkeinrichtungen (BS1, BS2) zur Kommunikation mit Teilnehmerstationen Funkressourcen verwenden,
bei welchem
eine erste netzseitige Funkeinrichtung (BS1) eine direkte Abstimmung mit einer zweiten netzseitigen Funkeinrichtung (BS2) über die jeweils verwendeten Funkressourcen durchführt, **dadurch gekennzeichnet, dass**
von der ersten (BS1) und/oder der zweiten (BS2) netzseitigen Funkeinrichtung eine Anfrage nach einer Entscheidung über von der ersten (BS1) und/oder der zweiten (BS2) netzseitigen Funkeinrichtung zu verwendende Funkressourcen an eine Einrichtung (TS) gesendet wird,
die erste (BS1) und/oder die zweite (BS2) netzseitige Funkeinrichtung auf die Anfrage hin von der Einrichtung (TS) Informationen über von der ersten (BS1) und/oder der zweiten (BS2) netzseitigen Funkeinrichtung zu verwendende Funkressourcen empfängt.

2. Verfahren nach Anspruch 1, bei dem
die Anfrage gesendet wird im Falle eines Konfliktes bei einer Entscheidung über von der ersten (BS1) und/oder der zweiten (BS2) netzseitigen Funkeinrichtung zu verwendende Funkressourcen im Rahmen der direkten Abstimmung.

3. Verfahren nach Anspruch 2, bei dem
die Anfrage gesendet wird im Falle einer Unmöglichkeit der Entscheidung über von der ersten (BS1) und/oder der zweiten (BS2) netzseitigen Funkeinrichtung zu verwendende Funkressourcen im Rahmen der direkten Abstimmung.

4. Verfahren nach Anspruch 1, bei dem
die Anfrage gesendet wird im Falle von oszillierenden Entscheidungen über von der ersten (BS1) und/oder der zweiten (BS2) netzseitigen Funkeinrichtung zu verwendende Funkressourcen im Rahmen der direkten Abstimmung.

5. Verfahren nach einem der Ansprüche 1 bis 4, bei dem aufgrund der direkten Abstimmung von der ersten netzseitigen Funkeinrichtung (BS1) ausschließlich andere Funkressourcen verwendet werden als von der zweiten netzseitigen Funkeinrichtung (BS2).

6. Verfahren nach einem der Ansprüche 1 bis 5, bei dem die Einrichtung (TS) durch die Informationen eine Neuzuweisung von von der ersten (BS1) und/oder der zweiten (BS2) netzseitigen Funkeinrichtung zu verwendenden Funkressourcen durchführt.

7. Verfahren nach einem der Ansprüche 1 bis 6, bei dem die erste (BS1) und/oder die zweite (BS2) netzseitige Funkeinrichtung zusätzlich zum Empfang der angefragten Informationen unangefragte Informationen über von der ersten (BS1) und/oder der zweiten (BS2) netzseitigen Funkeinrichtung zu verwendende Funkressourcen von der Einrichtung (TS) empfängt.

8. Verfahren nach einem der Ansprüche 1 bis 7, bei dem die Funkressourcen Kombinationen von Subbändern eines Frequenzbandes mit Zeitabschnitten umfassen.

9. Funkkommunikationssystem, in welchem netzseitige Funkeinrichtungen (BS1, BS2) zur Kommunikation mit Teilnehmerstationen Funkressourcen verwenden,
mit einer ersten (BS1) und einer zweiten (BS2) netzseitige Funkeinrichtung, welche eine direkte Abstimmung untereinander über die jeweils verwendeten Funkressourcen durchführen, **dadurch gekennzeichnet, dass**
mit Mitteln der ersten (BS1) und/oder der zweiten (BS2) netzseitigen Funkeinrichtung zum Senden einer Anfrage nach einer Entscheidung über von der ersten (BS1) und/oder der zweiten (BS2) netzseitigen Funkeinrichtung zu verwendende Funkressourcen an eine Einrichtung (TS), mit Mitteln der Einrichtung (TS) zum Entscheiden über von der ersten (BS1) und/oder der zweiten (BS2) netzseitigen Funkeinrichtung zu verwendende Funkressourcen und zum Senden von Informationen über von der ersten (BS1) und/oder der zweiten (BS2) netzseitigen Funkeinrichtung zu verwendende Funkressourcen an die erste (BS1) und/oder die zweite (BS2) netzseitige Funkeinrichtung.

## Claims

1. Method for operating a radio communication system, in which network radio devices (BS1, BS2) use radio resources to communicate with subscriber stations,
in which a first network radio device (BS1) carries out direct tuning with a second network radio device (BS2) in relation to the respectively used radio resources, **characterized in that** the first network radio device (BS1) and/or the second network radio device (BS2) transmits a request for a decision about radio resources to be used by the first network radio device (BS1) and/or radio resources to be used by the second network radio device (BS2) to a device (TS), in response to the request the first network radio device (BS1) and/or the second network radio device (BS2) receives, from the device (TS), information about radio resources to be used by the first network radio device (BS1) and/or radio resources to be used by the second network radio device (BS2).

2. Method as claimed in Claim 1, in which the request is transmitted in the case of a conflict in respect of a decision about radio resources to be used by the first network radio device (BS1) and/or radio resources to be used by the second network radio device (BS2) within the scope of the direct tuning.

3. Method as claimed in Claim 2, in which the request is transmitted when it is impossible to make the decision about radio resources to be used by the first network radio device (BS1) and/or radio resources to be used by the second network radio device (BS2) within the scope of the direct tuning.

4. Method as claimed in Claim 1, in which the request is transmitted in the case of fluctuating decisions about radio resources to be used by the first network radio device (BS1) and/or radio resources to be used by the second network radio device (BS2) within the scope of the direct tuning.

5. Method as claimed in one of Claims 1 to 4, in which, owing to the direct tuning, the first network radio device (BS1) makes exclusive use of different radio resources than those used by the second network radio device (BS2).

6. Method as claimed in one of Claims 1 to 5, in which the device (TS) uses the information to carry out re-allocation of radio resources to be used by the first network radio device (BS1) and/or of radio resources to be used by the second network radio device (BS2).

7. Method as claimed in one of Claims 1 to 6, in which the first network radio device (BS1) and/or the second network radio device (BS2) receives, in addition to the reception of the requested information, unrequested information from the device (TS) about radio resources to be used by the first network radio device (BS1) and/or radio resources to be used by the second network radio device (BS2).

8. Method as claimed in one of Claims 1 to 7, in which the radio resources comprise combinations of subbands of a frequency band with time segments.

9. Radio communication system, in which network radio devices (BS1, BS2) use radio resources to communicate with subscriber stations,
having a first network radio device (BS1) and a second network radio device (BS2) which carry out direct tuning with one another in relation to the respectively used radio resources, **characterized in that** having means of the first network radio device (BS1) and/or of the second network radio device (BS2) for transmitting a request for a decision about radio resources to be used by the first network radio device (BS1) and/or radio resources to be used by the second network radio device (BS2) to a device (TS),
having means of the device (TS) for deciding about radio resources to be used by the first network radio device (BS1) and/or radio resources to be used by the second network radio device (BS2), and for transmitting information about radio resources to be used by the first network radio device (BS1) and/or radio resources to be used by the second network radio device (BS2) to the first network radio device (BS1) and/or the second network radio device (BS2).

## Revendications

1. Procédé d'exploitation d'un réseau de radiocommunication dans lequel des dispositifs radio côté réseau (BS1, BS2) utilisent des ressources radio pour communiquer avec des stations d'abonnés, dans lequel un premier dispositif radio côté réseau (BS1) effectue une syntonisation directe sur un deuxième dispositif radio côté réseau (BS2) via les ressources radio respectivement utilisées, **caractérisé en ce que** :
- une demande de décision concernant des ressources radio à utiliser par le premier (BS1) et/ou le deuxième (BS2) dispositif radio côté réseau est envoyée à un dispositif (TS) par le premier (BS1) et/ou le deuxième (BS2) dispositif radio côté réseau ;
- le premier (BS1) et/ou le deuxième (BS2) dispositif radio côté réseau reçoit du dispositif (TS), suite à la demande, des informations sur des ressources radio à utiliser par le premier (BS1) et/ou le deuxième (BS2) dispositif radio côté réseau.

2. Procédé selon la revendication 1, dans lequel la demande est envoyée dans le cas d'un conflit lors d'une décision concernant des ressources radio à utiliser par le premier (BS1) et/ou le deuxième (BS2) dispositif radio côté réseau dans le cadre de la syntonisation directe.

3. Procédé selon la revendication 2, dans lequel la demande est envoyée dans le cas d'une impossibilité de décider concernant des ressources radio à utiliser par le premier (BS1) et/ou le deuxième (BS2) dispositif radio côté réseau dans le cadre de la syntonisation directe.

4. Procédé selon la revendication 1, dans lequel la demande est envoyée dans le cas de décisions oscillantes concernant des ressources radio à utiliser par le premier (BS1) et/ou le deuxième (BS2) dispositif radio côté réseau dans le cadre de la syntonisation directe.

5. Procédé selon l'une des revendications 1 à 4, dans lequel le premier dispositif radio côté réseau (BS1) utilise exclusivement, en raison de la syntonisation directe, d'autres ressources radio que le deuxième dispositif radio côté réseau (BS2).

6. Procédé selon l'une des revendications 1 à 5, dans lequel le dispositif (TS) effectue, du fait des informations, une réaffectation de ressources radio à utiliser par le premier (BS1) et/ou le deuxième (BS2) dispositif radio côté réseau.

7. Procédé selon l'une des revendications 1 à 6, dans lequel le premier (BS1) et/ou le deuxième (BS2) dispositif radio côté réseau reçoit du dispositif (TS), en plus de la réception des informations demandées, des informations non demandées sur des ressources radio à utiliser par le premier (BS1) et/ou le deuxième (BS2) dispositif radio côté réseau.

8. Procédé selon l'une des revendications 1 à 7, dans lequel les ressources radio comprennent des combinaisons de sous-bandes d'une bande de fréquence avec des intervalles de temps.

9. Système de radiocommunication dans lequel des dispositifs radio côté réseau (BS1, BS2) utilisent des ressources radio pour communiquer avec des stations d'abonnés, comportant un premier (BS1) et un deuxième (BS2) dispositif radio côté réseau, lesquels se syntonisent directement l'un sur l'autre via les ressources radio respectivement utilisées, **caractérisé en ce que** :
- des moyens du premier (BS1) et/ou du deuxième (BS2) dispositif radio côté réseau pour envoyer une demande de décision concernant des ressources radio à utiliser par le premier (BS1) et/ou le deuxième (BS2) dispositif radio côté réseau à un dispositif (TS) ;
- des moyens du dispositif (TS) pour décider concernant des ressources radio à utiliser par le premier (BS1) et/ou le deuxième (BS2) dispositif radio côté réseau et pour envoyer des informations sur des ressources radio à utiliser par le premier (BS1) et/ou le deuxième (BS2) dispositif radio côté réseau au premier (BS1) et/ou au deuxième (BS2) dispositif radio côté réseau.
